(19) Europäisches Patentamt
European Patent Office
Office européen des brevets

(11) **EP 2 800 035 A1**

(12) **EUROPEAN PATENT APPLICATION**

(43) Date of publication:
**05.11.2014 Bulletin 2014/45**

(51) Int Cl.:
***G06Q 10/06*** *(2012.01)*

(21) Application number: **13166449.2**

(22) Date of filing: **03.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft 80333 München (DE)**

(72) Inventors:
• **Kaelbling, Michael 81739 München (DE)**
• **Saft, Matthias 82140 Olching (DE)**

(54) **System for automatic estimation of software remediation effort**

(57)     The main idea of the invention is to create an infrastructure or system for an unobtrusive collection and accurate analysis of refactoring activities in software development projects. The invention is basically a system comprising: an automatic but decoupled revision control system in combination with a purposeful configuration of integrated development environments (IDEs) and/or general-purpose editors collecting data on atomic or nearly atomic remedial actions; and a repository of raw data directly and indirectly available to one or more analysis engines for processing into reports to project management, wherein an indirect access is through a so called "correlation engine" that uses differencing algorithms to detect the revisions between the appearance and removal of technical debt items. Herewith a collection of data at a fine-grained, textual level without explicit user interaction is possible. The software developers are not distracted from their actual work and the development process is not slowed down due to data collection. Furthermore, this system uses absolutely unmodified tooling and does not require developers to change to a different editor or development environment.

**Description**

**FIELD OF INVENTION**

The present invention relates to a system for estimation of software remediation effort, e. g. remediation costs. More specifically/particularly, the present invention is directed to a system for estimation of software remediation effort based on an accurate automatic data collection.

**BACKGROUND OF THE INVENTION**

It is currently difficult to get accurate estimates of the investment needed to reduce an accumulation of technical debt in software. In order to efficiently increase the net-present-value and future profitability of software-based products, development managers need accurate estimates of both the amount of remedial work to be done and of the effort or cost required to do the remedial work.

There are numerous tools already in use for estimating the amount of remedial work, also known as "technical debt" or less formally in coder jargon as "cruft", but there is a lack of accurate automated systems for producing satisfactory estimates of the effort needed.

Without accurate estimates of the effort or cost required to do the remedial work it is impossible to do accurate return-on-investment calculations, which creates the twin risks that profitable work will not be done, which means excessive opportunity cost, and that unprofitable work will be done, which means bad investment.

The major problem is a lack of data on which to base accurate estimates. There are many variables: the nature of the application, the developers involved, the tools used, the processes in place during development, the size of the project, the duration of the project etc. Detailed values are usually not available. Due to the overhead of collecting data in real-world development projects, such studies are neither budgeted nor executed by suppliers, sub-contractors, or the lead development house.

Currently the greatest hurdle to accurate data collection is the burden placed on software developers. This burden in time and distraction can lead to compliance/accuracy problems at the coder level, or more often it leads to management decisions not to collect the data. The overriding goal of soonest shipment means there is no time respectively budget for manual data collection. To be accurate, the data must be fine-grained, the tasks recorded must be atomic and the time to accomplish each task must be recorded.

Estimates are currently based on subjective, intuitive, expert opinion, or they are based on empirical values based on the analysis of past projects. The value and accuracy of commercial empirical values is hard to determine, because the studies on which they are based are often unpublished, proprietary knowledge, and due to an inherent conflict of interest in providing such estimates. The value and applicability of academic studies are often discounted due to the nature of the conditions under which academic studies are made.

**Automatic and decoupled revision control** systems exist per se, e.g. www.dropbox.com.

IDEs and editors with configurable automatic saving of intermediate drafts also exist per se, e.g. Eclipse®, Visual Studio®, Emacs®, and Microsoft Word®.

In this field of endeavor it is also known, to modify existing development tools/environments to capture more data.

**SUMMARY OF THE INVENTION**

The main idea of the invention is to create an infrastructure or system for an unobtrusive collection and accurate analysis of refactoring activities in software development projects. The invention is basically a system comprising: an automatic but decoupled revision control system in combination with a purposeful configuration of integrated development environments (IDEs) and/or general-purpose editors collecting data on atomic, or nearly atomic, remedial actions; and a repository of raw data directly and indirectly available to one or more analysis engines for processing into reports to project management, wherein an indirect access is through a so called "correlation engine" that uses differencing algorithms to detect the revisions between the appearance and removal of technical debt items. Herewith a collection of data at a fine-grained, textual level without explicit user interaction is possible. The software developers are not distracted from their actual work and the development process is not slowed down due to data collection. Furthermore, this system uses absolutely unmodified tooling and does not require developers to change to a different editor or development environment.

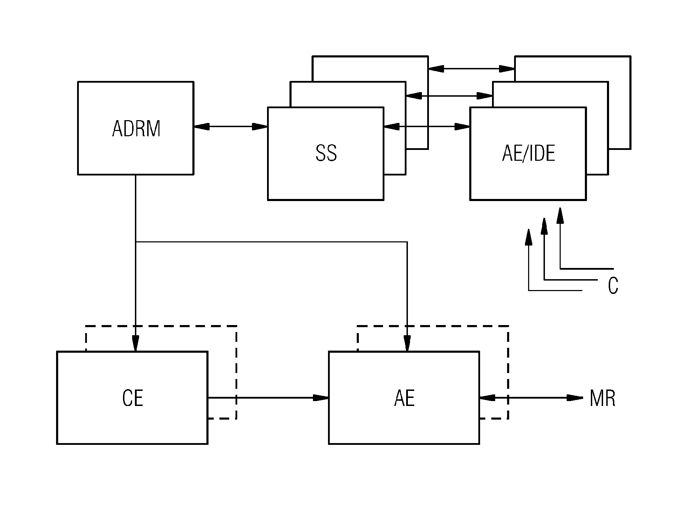

**BRIEF DESCRIPTION OF THE DRAWING**

The accompanying drawing, which is incorporated into and constitute a part of this specification, illustrate one or more embodiments of the present invention and, together with the detailed description, serves to explain the principles and implementations of the invention.

## DETAIL DESCRIPTION OF PREFERRED EMBODIMENTS

In the interest of clarity, not all of the features of the system described herein are shown/described.

The drawing shows the basic structure of the invention and depicts first blocks **AE/IDE** for arbitrary auto-saving editors or integrated development environments, second blocks **SS** for a stable storage, a third block **ADRM** for a automatic decoupled revision management, fourth blocks **CE** for correlation engines and fifth blocks **AE** for analysis engines.

The first blocks **AE/IDE** are representing a purposeful configuration of integrated development environments (IDEs) and/or general-purpose editors receiving information from coders **C** and collecting data on atomic or nearly atomic remedial actions.

The second blocks **SS** are used as a repository of raw data provided by the first blocks **AE/IDE.** At this point it has to be mentioned, that - for clearer presentation - not all connections to the second block SS are depicted in the drawing. The storage of complete source code in the data repository SS allows retrospective studies of features not originally included in the analysis. The decoupling of the data collection and analysis steps supports this easily.

The third block **ADRM** is also using the second blocks **SS** and is at least forming a control unit of an automatic but decoupled revision control system which is controlling the fourth blocks **CE** and fifth blocks **AE.**

The fourth blocks **CE** are representing at least one correlation engine automatically detecting the revisions between the appearance and removal of technical debt items.

The fifth block **AE** has direct access to the second block **SS** and is receiving data from the forth block **CE** and is processing into reports **MR** to project management.

The at least one auto-saving editor or at least one integrated development environment **AE/IDE** is creating different versions by editing software and is collecting data on remedial actions concerning technical debt items.

In a stable storage **SS** the raw data of the different versions is saved. The automatic decoupled revision management **ADRM is** revising the stored different versions automatically and is storing this revisions in the stable storage **SS.** The at least one correlation engine **CE** is automatically detecting the revisions between the appearance and removal of technical debt items and the at least one analysis engine **AE** is calculating a time estimate as a statistical mean of the time needed to remove this type of technical dept items.

To enhance the basic invention or to provide special solutions, the following can be optionally done:

Normally the data is collected at synchronization points like version control system "commits" or "check ins", or just at file save. To achieve the advantage of a finer granularity, optionally the data is also collected at so called "auto save points".

Optionally the correlation engine **CE** uses a differencing algorithm to detect the revisions between the appearance and removal of technical debt items.

Optionally the time estimate is multiplied by a staff-hour cost of the programmer assigned to remove technical debt items to get an estimate of the cost of the remedy.

For better understanding the following shows a concrete use case. As part of a technical debt assessment tool, e.g. PC-lint®, reports e.g. the following:

| 10 | **Type 744 findings** | - Switch statement has no default |
| 60 | **Type 787 findings** | - Enum constant not used in a switch without default |
| 20 | **Type 788 findings** | - Enum constant not used in a switch with a default |

These findings are e.g. in violation of the project coding guidelines which require that all switch statements have default cases and that switches over enum values completely enumerate the constants. The value of a default statement is two-fold. It ensures that all values are handled by the switch, and it ensures that all future revisions of the switch statement will continue to handle all values. The value of completely enumerating all constants is also two-fold. It makes code-reviews more productive by making oversights more visible to readers, and it makes it possible to automatically detect when a future change to the enum type invalidates corresponding switch statements.

For **type 744 findings,** it is necessary to supply **10** default cases. It may be that the default case is "impossible", i.e., that the functional requirements of the program should prevent it from ever being entered. In "impossible" situations, the remedy is to insert a default that reports a runtime error if the case is ever entered. On the other hand it may be that the default case is "no operation needed", i.e., that the functional requirements imply that no action be taken except for the explicit cases in the switch. In "no operation needed" situations, the remedy is to insert a default that contains a comment explicitly stating that no operation is needed.

For **type 787 findings,** the remedy is to supply both the **60** missing case labels for the reported enum constants in addition to one or more of the default cases reported as missing by a type 744 finding. The missing enum cases will contain a comment explicitly indicating "no operation needed", and the default will contain code to assert an error if it is ever entered.

For **type 788 findings,** the remedy is to supply the **20** missing case labels for the reported enum constants. PC-lint has reported the type and number of changes to be made. What is missing is the cost estimate per change.

These estimates are delivered by the invention from an analysis of the data for previous remedies of type 744, 787, and 788 findings:

$$\texttt{estimated\_cost} = \quad 10 * \texttt{est\_cost\_744} +$$

$$60 * \texttt{est\_cost\_787} +$$

$$20 * \texttt{est\_cost\_788}.$$

The estimated costs were derived automatically.

For example, if we consider **type 788 findings,** the database **SS** is searched for the snapshots where one or more **788 finding** disappeared. The timestamps are used to compute the statistical mean of the time needed to remove the finding, and that value is reported as an estimated time to remove each 788 finding. This time estimate can by multiplied by the staff-hour cost of the programmer assigned to remove the findings to get an estimate of the cost est_cost_788 of the remedy.

A mayor advantage is that the inventive system requires no active effort on the part of software developers. It does not distract them from their work. It does not slow down the completion of their development tasks. It does not require them to change to a different editor or development environment for the purpose of monitoring the atomic actions- a change would meet resistance at various levels and add costs in retraining and lost productivity.

The invention is not limited to analyses beyond estimates of remedial costs.

While the invention has been disclosed in connection with preferred embodiments shown and described in detail, their modifications and improvements thereon will become readily apparent to those skilled in the art. Accordingly, the spirit and scope of the present invention should be limited only by the following claims.

### Claims

1. A system for automatic estimation of software remediation effort comprising:

   - an automatic but decoupled revision control system (ADRM) in combination with a configuration of integrated development environments and/or general-purpose editors (AE/IDE) collecting data on remedial actions; and
   - a repository (SS) of raw data directly and indirectly available to at least one analysis engine (AE) for processing into reports (MR) to project management, wherein an indirect access is through at least one correlation engine (CE) which is detecting the revisions between the appearance and removal of technical debt items.

2. The system of claim 1,

   - creating different versions by editing software with the at least one auto-saving editor or at least one integrated development environment (AE/IDE),
   - collecting data on remedial actions concerning technical debt items,
   - saving the raw data of the different versions in a stable storage (SS),
   - revising the stored different versions automatically and storing this revisions,
   - detecting the revisions between the appearance and removal of technical debt items automatically in the at least one correlation engine (CE) and
   - calculating a time estimate as a statistical mean of the time needed to remove this type of technical dept items.

3. The system of claim 1, wherein said correlation engine (CE) uses a differencing algorithm to detect the revisions between the appearance and removal of technical debt items.

4. The system of one of the preceding claims, wherein said collecting data on remedial actions is additionally done at "auto save points".

5. The system of one of the preceding claims, wherein said time estimate is multiplied by a staff-hour cost of the programmer assigned to remove technical debt items to get an estimate of the cost of the remedy.

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/139177 A1 (POPOV KRASIMIR [BG]) 18 October 2012 (2012-10-18) * the whole document * ----- | 1-5 | INV. G06Q10/06 |
| X | US 2010/199258 A1 (LINDLEY JOE H [US] ET AL) 5 August 2010 (2010-08-05) * the whole document * ----- | 1-5 | |
| X | US 2006/190417 A1 (HILKEMEYER GERHARD [US] ET AL) 24 August 2006 (2006-08-24) * the whole document * ----- | 1-5 | |

TECHNICAL FIELDS
SEARCHED        (IPC)

G06Q

The present search report has been drawn up for all claims

| Place of search | Date of completion of the search | Examiner |
|---|---|---|
| Munich | 6 September 2013 | Breidenich, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 16 6449

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2013

| Patent document cited in search report | Publication date | Patent family member(s) | | Publication date |
|---|---|---|---|---|
| WO 2012139177 A1 | 18-10-2012 | NONE | | |
| US 2010199258 A1 | 05-08-2010 | NONE | | |
| US 2006190417 A1 | 24-08-2006 | US 2006190417 A1 | | 24-08-2006 |
| | | US 2011258143 A1 | | 20-10-2011 |
| | | US 2012221490 A1 | | 30-08-2012 |

EPO FORM P0459

For more details about this annex : see Official Journal of the European Patent Office, No. 12/82